# EUROPÄISCHE PATENTSCHRIFT

(11) **EP 3 348 535 B1**
(45) Veröffentlichungstag und Bekanntmachung des Hinweises auf die Patenterteilung: **01.07.2020**
(21) Anmeldenummer: 18150609.8
(22) Anmeldetag: 08.01.2018
(51) Int. Cl.: C04B 28/02, C04B 7/32, C04B 111/28, C04B 111/52

(54) **TROCKENMÖRTEL**
DRY MORTAR
MORTIER SEC

(30) Priorität: 11.01.2017 DE 102017100446
(43) Veröffentlichungstag der Anmeldung: 18.07.2018
(73) Patentinhaber: quick-mix Gruppe GmbH & Co. KG, 49090 Osnabrück (DE)
(72) Erfinder: Kanig, Dr., Martin, 49565 Bramsche (DE); Bühning, Volker, 49163 Bohmte (DE); Clasen, Dipl-Ing., Jost, 42555 Velbert (DE)
(74) Vertreter: Deters, Frank

(56) Entgegenhaltungen:
- EP-A1- 1 238 958
- EP-A1- 1 892 228
- WO-A1-2008/151878
- DE-U1-202005 015 351

## Beschreibung

Die Erfindung betrifft einen Trockenmörtel enthaltend mindestens 30,1 Gew.-% hydraulisches Bindemittel, 5 bis 25 Gew.-% redispergierbares Kunststoffdispersionspulver mit selbstvernetzenden Eigenschaften, 15 bis 25 Gew.-% Gummimehl und weiteren üblichen Zuschlägen und Additiven.

Ein derartiger Trockenmörtel ist beispielsweise aus der DE 3028559 C2 bekannt. Zur Verarbeitung wird der Trockenmörtel dabei mit Wasser vermischt. Der Trockenmörtel wird als Fliesenkleber oder als Ausgleichsmasse unterhalb von Belägen verwendet und verbessert durch den Anteil an redispergierbarem Kunststoffdispersionspulver sowie optional durch Gummimehl die Trittschalldämmung des Trockenmörtels durch Erhöhung der Verformbarkeit (Durchbiegung) des verarbeiteten Trockenmörtels. Redispergierbarer Kunststoff ist jedoch relativ teuer und zudem brennbar.

WO 2008/151878 A1 betrifft ein Trockenmörtel, welcher als Fliesenkleber verwendet wird, und ein redispergierbares Polymerpulver, sowie anorganische (u.a. Bläh-Vermiculit) und organische Füllstoffe (u.a. Gummimehl) enthält.

Der Erfindung liegt die Aufgabe zugrunde, einen Trockenmörtel der eingangs genannten Art bereitzustellen, der bei vermindertem Einsatz von redispergierbarem Kunststoffpulver dennoch eine gute Verformbarkeit des verarbeiteten Trockenmörtels und damit einhergehender guter Trittschalldämmung sicherstellt.

Die Erfindung wird durch einen Trockenmörtel gemäß dem Oberbegriff des Anspruchs 1 gelöst, der zudem 1 bis 20 Gew.-% geblähten Vermiculit enthält, der gemahlen ist und eine Korngröße von kleiner 0,125 mm auweist, wobei der Anteil des Kunststoffdispersionspulvers, des Gummimehls und des geblähten Vermiculits in Summe mindestens 25 Gew.-% bezogen auf die Gesamtmasse des Trockenmörtels beträgt. Vorteilhafte Ausgestaltungen der Erfindung sind den Unteransprüchen zu entnehmen.

Überraschenderweise hat sich gezeigt, dass geblähter Vermiculit im Zusammenspiel mit redispergierbarem Kunststoffdispersionspulver mit selbstvernetzenden Eigenschaften sowie mit Gummimehl in einem Trockenmörtel auf Basis eines hydraulischen Bindemittels die elastischen Eigenschaften des verarbeiteten Trockenmörtels deutlich erhöht. Das redispergierbare Kunststoffdispersionspulver kann dabei durch den Einsatz des geblähten Vermiculits reduziert werden. Für eine gute Verformbarkeit des verarbeiteten Trockenmörtels darf der Anteil des Kunststoffdispersionspulvers, des Gummimehls und des geblähten Vermiculits in Summe 25 Gew.-% bezogen auf die Gesamtmasse des Trockenmörtels nicht unterschreiten. Der geblähte Vermiculit ist zudem nicht brennbar, so dass der teilweise Ersatz des redispergierbaren Kunststoffdispersionspulvers durch den geblähten Vermiculit zusätzlich die Brandeigenschaften des verarbeiteten Trockenmörtels verbessert. Weshalb gerade geblähter Vermiculit geeignet ist, lässt sich derzeit nicht abschließend bewerten. Möglicherweise bildet der geblähte Vermiculit eine Schichtstruktur aus, wobei die einzelnen Schichten zueinander beabstandet und deren Abstand zueinander unter Krafteinwirkung reversibel veränderbar ist.

In einer besonders bevorzugten Ausgestaltung der Erfindung erreicht der erfindungsgemäße Trockenmörtel nach dessen Verarbeitung eine Verformbarkeit (Durchbiegung) von wenigstens 5 mm bestimmt nach DIN EN 12002. Der Trockenmörtel ist damit stark verformbar im Sinne der DIN EN 12002, so dass es sich um einen S2-Trockenmörtel handelt.

Der geblähte Vermiculit ist gemahlen und weist eine Korngröße von kleiner 0,125 mm auf. Mit Vorteil weist der Vermiculit alternativ oder ergänzend hierzu eine spezifische Oberfläche von mehr als 2500 cm²/g auf, insbesondere von mehr als 4500 cm²/g. Es hat sich überraschenderweise gezeigt, dass gerade diese kleine Korngröße und darüber hinaus auch die vorgenannte spezifische Oberfläche des Vermiculits jeweils unabhängig voneinander die Verformbarkeit (Durchbiegung) des erfindungsgemäßen Trockenmörtels nach dessen Verarbeitung und damit dessen trittschalldämmende Wirkung verbessert.

Das Gummimehl weist bevorzugt eine Korngröße von kleiner 1 mm auf. Auch hier hat sich überraschenderweise gezeigt, dass gerade diese kleine Korngröße dazu führt, dass die Verformbarkeit (Durchbiegung) des erfindungsgemäßen Trockenmörtels nach dessen Verarbeitung in besonderem Maße erhöht wird.

In einer besonders bevorzugten Ausgestaltung der Erfindung enthält der Trockenmörtel 10 bis 20 Gew.-% redispergierbares Kunststoffdispersionspulver mit selbstvernetzenden Eigenschaften. Alternativ oder ergänzend hierzu enthält der Trockenmörtel 5 bis 20 Gew.-% geblähten Vermiculit. Überraschenderweise hat sich herausgestellt, dass die Einhaltung der vorgenannten Bereichsangaben der Komponenten dazu führt, dass die Verformbarkeit (Durchbiegung) des erfindungsgemäßen Trockenmörtels in dessen verarbeiteter Form und damit auch dessen Trittschalldämmung besonders hoch ist.

Mit Vorteil enthält der erfindungsgemäße Trockenmörtel 10 bis 30 Gew.-% Sand, insbesondere Quarzsand. Der Sand dient dabei als Füllstoff, der kostengünstig zu beschaffen ist, das Brandverhalten des verarbeiteten Trockenmörtels positiv beeinflusst und zudem das Trittschallschutz-Verhalten des erfindungsgemäßen Trockenmörtels nach dessen Verarbeitung nicht nachteilig beeinflusst.

Ein Trockenmörtel nach dem Oberbegriff des Anspruchs 1 wurde angemischt und der Prüfmörtel gemäß der DIN EN 12002 hergestellt, konditioniert und die Verformung (Durchbiegung) bestimmt. Der Trockenmörtel wies dabei folgende Zusammensetzung auf:

| | |
|---|---|
| Zement | 32,6 Gew.-% |
| Trockensand | 25,3 Gew.-% |
| redispergierbares Kunststoffdispersionspulver | 20,0 Gew.-% |
| Gummimehl | 20,0 Gew.-% |
| Additive | 2,1 Gew.-% |

Der dergestalt zusammengesetzte Trockenmörtel wurde gemäß DIN EN 12002:2009-01 auf dessen Verformbarkeit überprüft. Es wurde eine Verformung (Durchbiegung) von 5,8 mm gemessen.

Zum Vergleich wurde ein Ausführungsbeispiel des erfindungsgemäßen Trockenmörtels mit der nachfolgenden Zusammensetzung ebenfalls gemäß der DIN EN 12002 hergestellt:

| | |
|---|---|
| Zement | 32,6 Gew.-% |
| Trockensand | 25,3 Gew.-% |
| redispergierbares Kunststoffdispersionspulver | 15,0 Gew.-% |
| Gummimehl | 20,0 Gew.-% |
| geblähtes Vermiculit | 5,0 Gew.-% |
| Additive | 2,1 Gew.-% |

Im Ausführungsbeispiel der Erfindung wurde somit ein Anteil von 5 Gew.-% des redispergierbaren Kunststoffdispersionspulvers durch einen Zusatz von 5 Gew.-% geblähten Vermiculits ersetzt. Auch hier wurde eine Prüfung der Verformbarkeit (Durchbiegung) gemäß DIN EN12002:2009-01 durchgeführt. Es wurde eine Durchbiegung von 6,4 mm gemessen.

## Patentansprüche

1. Trockenmörtel enthaltend mindestens 30,1 Gew.-% hydraulisches Bindemittel, 5 bis 25 Gew.-% redispergierbares Kunststoffdispersionspulver mit selbstvernetzenden Eigenschaften, 15 bis 25 Gew.-% Gummimehl und weiteren üblichen Zuschlägen und Additiven, **dadurch gekennzeichnet, dass** der Trockenmörtel zudem 1 bis 20 Gew.-% geblähten Vermiculit enthält, der gemahlen ist und eine Korngröße von kleiner 0,125 mm aufweist, wobei der Anteil des Kunststoffdispersionspulvers, des Gummimehls und des geblähten Vermiculits in Summe mindestens 25 Gew.-% bezogen auf die Gesamtmasse des Trockenmörtels beträgt.

2. Trockenmörtel nach Anspruch 1, **dadurch gekennzeichnet, dass** er verarbeitet eine Durchbiegung von wenigstens 5 mm bestimmt nach DIN EN 12002 erreicht.

3. Trockenmörtel nach einem der vorhergehenden Ansprüche, **dadurch gekennzeichnet, dass** der Vermiculit eine spezifische Oberfläche von mehr als 2500 cm²/g aufweist, insbesondere von mehr als 4500 cm²/g.

4. Trockenmörtel nach einem der vorhergehenden Ansprüche, **dadurch gekennzeichnet, dass** das Gummimehl eine Korngröße von kleiner 1 mm aufweist.

5. Trockenmörtel nach einem der vorhergehenden Ansprüche, **dadurch gekennzeichnet, dass** er 10 bis 20 Gew.-% redispergierbares Kunststoffdispersionspulver mit selbstvernetzenden Eigenschaften enthält.

6. Trockenmörtel nach einem der vorhergehenden Ansprüche, **dadurch gekennzeichnet, dass** er 5 bis 20 Gew.-% geblähten Vermiculit enthält.

7. Trockenmörtel nach einem der vorhergehenden Ansprüche, **dadurch gekennzeichnet, dass** er 10 bis 40 Gew.-% Sand enthält.

## Claims

1. Dry mortar containing at least 30.1 wt.% hydraulic binder, 5 to 25 wt.% redispersible plastics dispersion powder having self-crosslinking properties, 15 to 25 wt.% rubber powder and other usual aggregates and additives, **characterised in that** the dry mortar also contains 1 to 20 wt.% exfoliated vermiculite which is ground and has a grain size of less than 0.125 mm, the proportion of the plastics dispersion powder, the rubber powder and the exfoliated vermiculite being in total at least 25 wt.%, based on the total mass of the dry mortar.

2. Dry mortar according to claim 1, **characterised in that**, processed, the dry mortar achieves a deflection of at least 5 mm, determined according to DIN EN 12002.

3. Dry mortar according to either of the preceding claims, **characterised in that** the vermiculite has a specific surface area of more than 2500 cm²/g, in particular of more than 4500 cm²/g.

4. Dry mortar according to any of the preceding claims, **characterised in that** the rubber powder has a grain size of less than 1 mm.

5. Dry mortar according to any of the preceding claims, **characterised in that** the dry mortar contains 10 to 20 wt.% redispersible plastics dispersion powder having self-crosslinking properties.

6. Dry mortar according to any of the preceding claims, **characterised in that** the dry mortar contains 5 to 20 wt.% exfoliated vermiculite.

7. Dry mortar according to any of the preceding claims, **characterised in that** the dry mortar contains 10 to 40 wt.% sand.

## Revendications

1. Mortier sec contenant au moins 30,1 % en poids de liant hydraulique, 5 à 25 % en poids de poudre de dispersion de matière plastique redispersible avec des propriétés autoréticulables, 15 à 25 % en poids de poudre de caoutchouc et d'autres agrégats et additifs habituels, **caractérisé en ce que** le mortier sec contient en outre 1 à 20 % en poids de vermiculite expansée qui est moulue et présente une granulométrie inférieure à 0,125 mm, les parts de la poudre de dispersion de matière plastique, de la poudre de caoutchouc et de la vermiculite expansée représentant additionnées au moins 25 % en poids par rapport au poids total du mortier sec.

2. Mortier sec selon la revendication 1, **caractérisé en ce qu'**il atteint en traitement une déformation d'au moins 5 mm telle que définit selon la norme DIN EN 12002.

3. Mortier sec selon une des revendications précédentes, **caractérisé en ce que** la vermiculite présente une surface spécifique supérieure à 2 500 cm²/g, en particulier supérieure à 4 500 cm²/g.

4. Mortier sec selon une des revendications précédentes, **caractérisé en ce que** la poudre de caoutchouc présente une granulométrie inférieure à 1 mm.

5. Mortier sec selon une des revendications précédentes, **caractérisé en ce qu'**il contient 10 à 20 % en poids de poudre de dispersion de matière plastique redispersible avec des propriétés autoréticulables.

6. Mortier sec selon une des revendications précédentes, **caractérisé en ce qu'**il contient 5 à 20 % en poids de vermiculite expansée.

7. Mortier sec selon une des revendications précédentes, **caractérisé en ce qu'**il contient 10 à 40 % en poids de sable.
